# FASCICULE DE BREVET EUROPEEN

(11) **EP 0 798 487 B1**
(45) Date de publication et mention de la délivrance du brevet: **23.05.2001**
(21) Numéro de dépôt: 97400685.0
(22) Date de dépôt: 26.03.1997
(51) Int. Cl.: F16F 13/14

(54) **Manchons de support antivibratoires hydrauliques**
Hydraulisches,schwingungsdämpfendes Hülsenlager
Hydraulic antivibration mounts of the bushing type

(30) Priorité: 29.03.1996 FR 9603991
(43) Date de publication de la demande: 01.10.1997
(73) Titulaire: HUTCHINSON, 75008 Paris (FR)
(72) Inventeur: Renaud, François, 18100 Vierzon (FR); Bouhier, Bernard, 41140 Noyers/Cher (FR)
(74) Mandataire: Burbaud, Eric

(56) Documents cités:
- EP-A- 0 304 349
- EP-A- 0 326 472
- EP-A- 0 418 718
- EP-A- 0 595 727
- DE-A- 3 618 767
- DE-A- 4 233 705
- DE-A- 4 320 643
- DE-C- 4 242 080

## Description

L'invention est relative aux manchons de support antivibratoires hydrauliques présentant une forme cylindrique centrée sur un axe longitudinal et comprenant:
- deux armatures rigides tubulaires s'entourant l'une l'autre et réunies entre elles par un corps en élastomère relié de façon étanche à celles-ci et conformé de façon à former avec elles au moins deux chambres étanches diamétralement opposées qui communiquent entre elles par un canal étroit, l'ensemble desdites chambres et dudit canal étant rempli d'un liquide,
- une membrane de découplage étanche et flexible séparant les deux chambres,
- une cage cylindrique rigide emmanchée à l'intérieur de l'armature tubulaire externe et adhérée sur le corps en élastomère, cette cage cylindrique rigide étant évidée par des fenêtres en regard des chambres, ladite cage comprenant deux bagues d'extrémité centrées sur l'axe longitudinal et entretoisées par des barreaux longitudinaux parallèles à l'axe longitudinal.

De tels manchons sont destinés à être montés aux fins de support et d'amortissement entre deux pièces rigides solidarisables respectivement avec les deux armatures et susceptibles de subir l'une par rapport à l'autre des oscillations orientées selon la direction diamétrale D, l'ensemble étant agencé de façon telle que, pour certaines au moins de ces oscillations, présentant une relativement basse fréquence (par exemple de l'ordre de 15 Hz) et une relativement grande amplitude (généralement supérieure au mm), le liquide soit refoulé alternativement de l'une des chambres vers l'autre et inversement à travers le canal étroit, ce qui crée dans ce liquide, pour certaines fréquences des oscillations, un phénomène de résonance propre à amortir la transmission de ces oscillations de l'une des armatures à l'autre.

Les manchons à débattement diamétral du genre en question sont par exemple destinés à être interposés entre, d'une part, un châssis de véhicule et, d'autre part, le moteur à combustion interne ou le train de suspension avant ou arrière de ce véhicule.

L'invention vise plus particulièrement, parmi les manchons ci-dessus, ceux qui sont équipés de moyens de "découplage haute fréquence", c'est-à-dire permettant de filtrer les vibrations de relativement faible amplitude (généralement inférieure à 0,5 mm) et de relativement haute fréquence (généralement supérieure à 20 Hz) telles que celles dues au fonctionnement d'un moteur à combustion interne de véhicule, moyens comprenant, d'une part, une membrane étanche et flexible qui sépare les deux chambres et, d'autre part, des moyens pour limiter à une faible valeur, notamment de l'ordre de 0,5 mm, l'amplitude des débattements de ladite membrane.

De tels manchons ont par exemple été décrits dans le document EP-A-0 326 472.

L'invention a pour but, surtout, de proposer un mode de réalisation particulièrement simple et économique pour les moyens de découplage de tels manchons.

A cet effet, un manchon du genre en question, selon l'invention est caractérisé en ce que l'un au moins des barreaux longitudinaux de la cage cylindrique est creusé vers l'intérieur du manchon de façon à former entre lui et l'armature externe une poche ouverte à ses deux extrémités circonférentielles, et le corps en élastomère étant prolongé à l'intérieur de cette poche par une languette s'étendant selon une direction proche de la direction circonférentielle et dont le bord extérieur est appliqué contre l'armature externe, ladite languette constituant la membrane de découplage.

Dans des modes de réalisation avantageux, on a recours en outre à l'une et/ou à l'autre des dispositions suivantes :
- le bord extérieur de la languette est fixé sur la cage par enrobage d'un barreau longitudinal rectiligne constitutif de cette cage,
- la face intérieure de la cage porte un garnissage rigide formant, à proximité de la languette, des guides de positionnement de cette languette tout en rendant possibles les vibrations de celle-ci et la communication de ses deux faces avec les deux chambres,
- les guides selon l'alinéa précédent sont agencés de façon à pincer entre eux le bord extérieur de la languette,
- les guides selon l'un quelconque des deux alinéas précédents sont dédoublés de façon à réserver entre eux des fentes pour faciliter la circulation du liquide.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

Les figures 1, 2 et 3, de ces dessins, montrent un manchon antivibratoire hydraulique établi conformément à l'invention, respectivement en vue en bout, en coupe axiale selon II-II, figure 1, et en coupe transversale, selon III-III, figure 2.

La figure 4 est une vue en perspective partielle de la cage ajourée comprise par ce dispositif.

La figure 5 est une vue partielle agrandie d'une variante conforme à la figure 3 et également conforme à l'invention.

Les figures 6 et 7 montrent en vue perspective deux détails de cette variante.

Les figures 8 et 9 montrent selon des vues partielles agrandies conformes aux figures 2 et 3, une autre variante conforme à l'invention.

Dans chaque cas, le manchon de support comprend :
- une armature métallique interne tubulaire de révolution 1 dont l'axe X est généralement horizontal,
- une armature métallique externe tubulaire de révolution 2 coaxiale à l'armature 1 au moins pour l'état monté et chargé du manchon et entourant cette armature 1,
- et un corps en élastomère 3 reliant l'une à l'autre les deux armatures 1 et 2 en ménageant entre celles-ci deux chambres étanches A, B diamétralement opposées selon une direction D généralement verticale.

L'armature interne 1 est destinée à être solidarisée avec une broche (non représentée) qui la traverse jointivement alors que l'armature externe 2 est destinée à être solidarisée avec un palier (non représenté), cette broche et ce palier étant solidaires respectivement de deux éléments rigides entre lesquels on désire monter un support antivibratoire, éléments tels qu'un moteur ou bras de suspension de véhicule et que le châssis de ce véhicule.

Les deux chambres A et B communiquent entre elles par un canal étroit 4 qui est supposé ici percé dans l'armature interne 1 et dans la portion, du corps en élastomère 3, qui enrobe cette armature.

Ces deux chambres et le canal étroit 4 sont remplis d'un liquide d'amortissement tel que de l'eau additionnée d'antigel.

Le fonctionnement d'un tel manchon de support est le suivant.

Au repos, le manchon se trouve dans son état illustré sur les dessins.

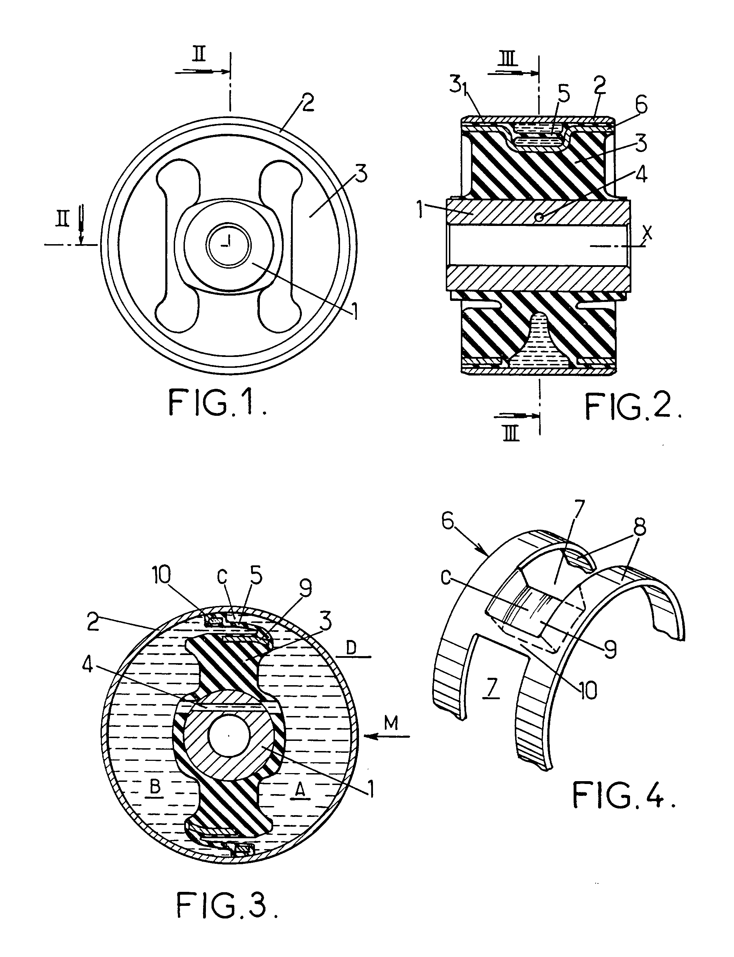

Si, à partir de cette situation, on applique sur l'armature externe 2, par rapport à l'armature interne 1, une sollicitation selon la direction D dans le sens de la flèche M (figure 3), la chambre A se rétrécit par écrasement alors qu'au contraire la chambre B se dilate : **:** le liquide initialement contenu dans la chambre A est alors chassé dans la chambre B à travers le canal étroit 4.

Cet effet est inversé dès que la sollicitation en sens inverse de la précédente est exercée sur l'armature 2.

L'alternance de ces sollicitations est généralement renouvelée à une certaine fréquence et, pour une valeur donnée de cette fréquence, qui est prédéterminée et liée aux dimensions du canal étroit 4, et en particulier au rapport entre sa section droite et sa longueur, la masse de liquide circulant dans ce canal est mise en résonance et le support exerce alors sur la transmission des oscillations de l'une des armatures à l'autre un excellent amortissement.

Le perfectionnement plus particulièrement visé par la présente invention concerne son "découplage" vis-à-vis de certaines hautes fréquences, c'est-à-dire le filtrage direct de certaines vibrations présentant une fréquence relativement élevée et une amplitude relativement faible, sans circulation notable de liquide dans le canal étroit 4.

On fait appel à cet effet à au moins une membrane 5 interposée entre les deux chambres A et B de façon telle que ses deux faces communiquent respectivement avec ces deux chambres.

En outre ladite membrane est venue de moulage avec le corps en élastomère 3, ce qui simplifie à la fois sa fabrication et son montage.

Pour obtenir ce résultat, on procède comme suit.

On a recours à une cage cylindrique rigide 6 en tôle emboutie, évidée par des fenêtres 7 en regard des chambres A et B et adhérée sur le corps en élastomère 3, cette cage 6 étant donc constituée par deux bagues latérales 8 entretoisées par des barreaux longitudinaux 9, 10.

Cette cage 6, qui est avantageusement recouverte par une couche en élastomère 3₁ de faible épaisseur elle-même venue de moulage avec le corps 3, présente un diamètre extérieur très légèrement inférieur au diamètre intérieur de l'armature externe 2 de façon à pouvoir être emmanchée à force dans cette dernière, ce simple emmanchement assurant l'étanchéité de fermeture des deux chambres A et B.

L'un au moins des barreaux 9 est creusé vers l'intérieur du manchon selon un pontet renversé de façon à former entre lui-même et l'armature externe 2 une encoche ou poche C ouverte à ses deux extrémités circonférentielles.

C'est dans cette poche C qu'est logée la membrane 5, elle-même constituée par une languette prolongeant extérieurement la portion, du corps 3, adhérée contre la face interne du barreau 9 considéré.

Le bord externe de la membrane 5 est appliqué jointivement et de façon étanche contre la face interne de l'armature externe 2.

Cette application est avantageusement assurée en enrobant à l'intérieur dudit bord externe un barreau 10 rectiligne constitutif de la cage 6, comme visible sur la figure 3.

Comme également visible sur cette figure 3, la membrane disposée dans la poche C est orientée de façon à être peu inclinée sur la direction circonférentielle, ce qui lui permet d'avoir une relativement grande étendue sans que le creux défini par le barreau 9 soit très prononcé.

Comme visible sur la figure 2, la languette 5 s'étend sur toute la largeur, comptée selon la direction axiale, de la poche C de façon telle que les deux chambres A et B demeurent isolées l'une de l'autre vis-à-vis du liquide.

Dans le mode de réalisation des figures 1 à 4, les espaces compris radialement entre la membrane ou languette 5 et les deux parois rigides en regard (barreau 9 et armature externe 2) sont très étroits, ce qui peut poser quelques difficultés pour la réalisation des portions de moule rigide destinées à créer lesdits espaces.

Mais si l'on augmente la largeur radiale de ces espaces, on diminue d'autant l'épaisseur de la membrane 5, ce qui rend opportun le recours à des moyens spéciaux pour supporter cette membrane.

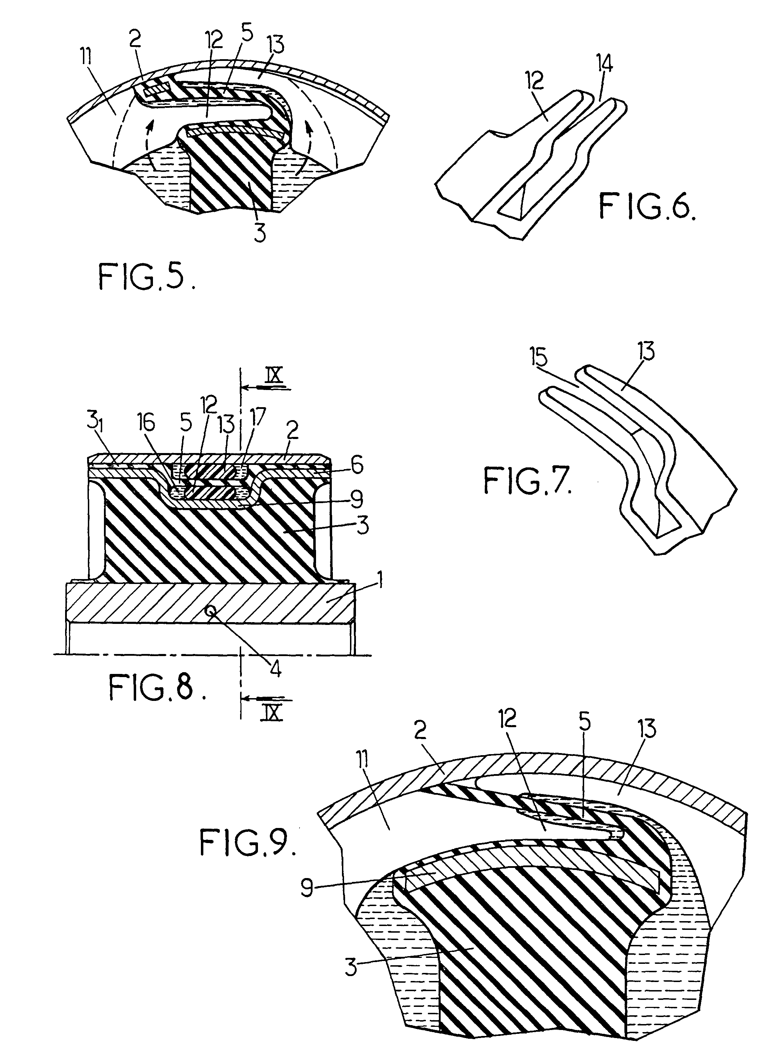

De tels moyens ont été prévus dans les variantes illustrées respectivement aux figures 5 à 7 et aux figures 8 et 9.

Dans chacune de ces variantes, une garniture rigide 11 est appliquée contre la face interne de l'armature tubulaire externe 2, garniture qui est avantageusement exploitée pour constituer, à l'intérieur des poches A et B, une butée de fin de course pour les débattements diamétraux de grande amplitude du manchon.

A proximité de chaque membrane 5, cette garniture 11 est conformée selon des doigts 12, 13 propres à pénétrer dans les deux espaces évidés radialement de part et d'autre de la membrane.

Ces doigts permettent en particulier de positionner avec précision la racine et la tête de la languette 5, qui sont avantageusement pincées toutes les deux entre des portions en regard de ces doigts, tout en ménageant les possibilités de vibration de la membrane, ainsi que de circulation du liquide le long de ses deux faces.

Dans le mode de réalisation des figures 5 à 7, chaque doigt, 12, 13 est dédoublé, ce qui ménage entre les deux moitiés de chaque doigt une fente (14, 15) facilitant la circulation du liquide.

Dans le mode de réalisation des figures 8 et 9, les doigts 12, 13 ne sont pas dédoublés.

Mais, comme visible sur la figure 8, la largeur axiale de chacun de ces deux doigts est inférieure à la largeur axiale de la poche C, de sorte que la liaison entre chacune des deux faces de la membrane et la chambre (A ou B) correspondante peut être établie à travers les couloirs 16, 17, qui longent lesdits doigts.

Dans ce mode de réalisation, le barreau 10 ci-dessus est supprimé, l'application ferme du bord externe de la membrane 5 contre la face intérieure de l'armature tubulaire externe 2 étant prise en charge par le pincement de ce bord entre deux portées en regard des doigts 12 et 13.

Bien qu'une seule membrane de découplage 5 puisse être prévue, on préfère en prévoir deux, diamétralement opposées par rapport à l'axe X du manchon, ainsi que visible sur la figure 3.

En suite de quoi, et quel que soit le mode de réalisation adopté, on dispose d'un manchon antivibratoire hydraulique dont la constitution et le fonctionnement résultent suffisamment de ce qui précède.

Ce manchon présente un certain nombre d'avantages par rapport à ceux actuellement connus, en particulier celui de simplifier la fabrication et le montage de chaque membrane 5, puisque celle-ci peut venir directement de moulage avec le corps en élastomère 3.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Manchon de support antivibratoire hydraulique présentant une forme cylindrique centrée sur un axe longitudinal (X) et comprenant :
- deux armatures rigides tubulaires (1, 2) s'entourant l'une l'autre et réunies entre elles par un corps en élastomère (3) relié de façon étanche à celles-ci et conformé de façon à former avec elles au moins deux chambres étanches (A, B) diamétralement opposées qui communiquent entre elles par un canal étroit (4), l'ensemble desdites chambres et dudit canal étant rempli d'un liquide,
- une membrane de découplage étanche et flexible (5) séparant les deux chambres,
- une cage cylindrique rigide (6), emmanchée à l'intérieur de l'armature tubulaire externe (2) et adhérée sur le corps en élastomère (3), cette cage cylindrique rigide (6) étant évidée par des fenêtres (7) en regard des chambres, ladite cage comprenant deux bagues d'extrémité (8) centrées sur l'axe longitudinal (X) et entretoisées par des barreaux longitudinaux (9, 10) parallèles à l'axe longitudinal (X),
**caractérisé en ce que** l'un au moins des barreaux longitudinaux (9) de la cage cylindrique est creusé vers l'intérieur du manchon de façon à former entre lui et l'armature externe une poche (C) ouverte à ses deux extrémités circonférentielles, et le corps en élastomère étant prolongé à l'intérieur de cette poche par une languette (5) s'étendant selon une direction proche de la direction circonférentielle et dont le bord extérieur est appliqué contre l'armature externe, ladite languette constituant la membrane de découplage.

2. Manchon antivibratoire hydraulique selon la revendication 1, caractérisé en ce que le bord extérieur de la languette (5) est fixé sur la cage (6) par enrobage d'un barreau longitudinal rectiligne (10) constitutif de cette cage.

3. Manchon antivibratoire hydraulique selon l'une quelconque des précédentes revendications, caractérisé en ce que la face intérieure de la cage (6) porte un garnissage rigide (11) formant, à proximité de la languette, des guides de positionnement de cette languette tout en rendant possibles les vibrations de celle-ci et la communication de ses deux faces avec les deux chambres (A, B) .

4. Manchon antivibratoire hydraulique selon la revendication 3, caractérisé en ce que les guides (12, 13) sont agencés de façon à pincer entre eux le bord extérieur de la languette (5).

5. Manchon antivibratoire hydraulique selon l'une quelconque des revendications 3 et 4, caractérisé en ce que les guides (12, 13) sont dédoublés de façon à réserver entre eux des fentes (14, 15) pour faciliter la circulation du liquide.

## Patentansprüche

1. Hydraulisches, schwingungsdämpfendes Hülsenlager mit einer auf einer Längsachse (X) zentrierten zylindrischen Form, besteh aus:
- zwei rohrförmigen, starren Bewehrungen (1, 2), die ineinander stecken und durch einen Elastomerkörper (3) zusammengehalten werden, der mit ihnen dicht verbunden ist und so geformt ist, dass er mit ihnen mindestens zwei dichte, einander diametral gegenüberliegende Kammern (A, B) bildet, die durch einen engen Kanal (4) miteinander kommunizieren, wobei diese Kammern und dieser Kanal mit einer Flüssigkeit gefüllt sind,
- einer dichten und biegsamen Abkopplungsmembran (5), die die beiden Kammern trennt,
- einem starren, zylindrischen Gestell (6), das im Inneren der äußeren rohrförmigen Bewehrung (2) aufgeschrumpft ist und auf dem Elastomerkörper (3) haftet, wobei in diesem starren, zylindrischen Gestell (6) den Kammern gegenüber Fenster (7) ausgespart sind, wobei dieses Gestell aus zwei Endringen (8) besteht, die auf der Längsachse (X) zentriert sind und durch Längsstäbe (9, 10), die parallel zur Längsachse (X) verlaufen, miteinander verstrebt sind,
**dadurch gekennzeichnet, dass** mindestens einer der Längsstäbe (9) des zylindrischen Gestells zum Inneren des Lagers hin hohl ist, so dass zwischen ihm und der äußeren Bewehrung eine Tasche (C) gebildet wird, die an ihren beiden Umfangsenden offen ist, wobei der Elastomerkörper sich ins Innere dieser Tasche mit einer Zunge (5) fortsetzt, die sich in einer Richtung erstreckt, die an die Umfangsrichtung herankommt, und deren Außenkante an der äußeren Bewehrung anliegt, wobei diese Zunge die Abkopplungsmembran bildet.

2. Hydraulisches, schwingungsdämpfendes Hülsenlager nach Anspruch 1, dadurch gekennzeichnet, dass die Außenkante der Zunge (5) an dem Gestell (6) durch Umfassen eines geradlinigen Längsstabs (10), der ein Bestandteil dieses Gestells ist, befestigt ist.

3. Hydraulisches, schwingungsdämpfendes Hülsenlager nach einem der vorherigen Ansprüche, dadurch gekennzeichnet, dass sich an der Innenseite des Gestells (6) eine starre Auskleidung (11) befindet, die in der Nähe der Zunge Positionierungsführungen für diese Zunge aufweist und es dabei ermöglicht, dass diese schwingt und mit ihren beiden Seiten mit den beiden Kammern (A, B) in Verbindung steht.

4. Hydraulisches, schwingungsdämpfendes Hülsenlager nach Anspruch 3, dadurch gekennzeichnet, dass die Führungen (12, 13) dergestalt ausgeführt sind, dass sie die Außenkante der Zunge (5) zwischen sich einklemmen.

5. Hydraulisches, schwingungsdämpfendes Hülsenlager nach einem der Ansprüche 3 und 4, dadurch gekennzeichnet, dass die Führungen (12, 13) dergestalt gedoppelt sind, dass sie zwischen sich Schlitze (14, 15) aufweisen, um die Zirkulation der Flüssigkeit zu erleichtern.

## Claims

1. Hydraulic antivibration supporting sleeve having a cylindrical form centred on a longitudinal axis (X) and comprising :
- two tubular rigid reinforcements (1, 2) one surrounding the other and joined together by a body made of elastomer (3) connected in a leakproof manner to these and arranged so as to form with them at least two diametrically opposed leakproof chambers (A, B) which communicate with each other through a narrow channel (4), the said chambers and the said channel being all filled with a liquid,
- a leakproof flexible disconnecting membrane (5) separating the two chambers,
- a rigid cylindrical cage (6), fitting inside the outer tubular reinforcement (2) and adhering to the body made of elastomer (3), this rigid cylindrical cage (6) being cut away by two windows (7) opposite the chambers, the said cage including two end rings (8) centred on the longitudinal axis (X) and braced by longitudinal bars (9, 10) parallel to the longitudinal axis (X),
characterized in that at least one of the longitudinal bars (9) of the cylindrical cage is hollowed out towards the inside of the sleeve so as to form between it and the outer reinforcement a pocket (C) open at its two circumferential ends, and the body made of elastomer being extended inside this pocket by a tongue (5) extending in a direction close to the circumferential direction and of which the outer edge is applied against the outer reinforcement, the said tongue constituting the disconnecting membrane.

2. Hydraulic antivibration sleeve according to claim 1, characterized in that the outer edge of the tongue (5) is attached to the cage (6) by covering a rectilinear longitudinal (10) which is a constituent of this cage.

3. Hydraulic antivibration sleeve according to any one of the preceding claims, characterized in that the inner face of the cage (6) carries a rigid cladding (11) forming, close to the tongue, guides for positioning this tongue while allowing the latter to vibrate and its two faces to communicate with the two chambers (A, B).

4. Hydraulic antivibration sleeve according to claim 3, characterized in that the guides .(12, 13) are arranged so as to clamp the outer edge of the tongue (5) between them.

5. Hydraulic antivibration sleeve according to either of claims 3 or 4, characterized in that the guides (12, 13) are split into two so as to keep slots (14, 15) between them in order to facilitate the circulation of the liquid.
